# EUROPEAN PATENT APPLICATION

(11) **EP 3 232 606 A1**
(43) Date of publication of application: **18.10.2017**
(21) Application number: 15876462.1
(22) Date of filing: 07.01.2015
(51) Int. Cl.: H04L 12/14

(54) **CONTROL SIGNALLING TRANSMISSION METHOD IN MCPTT STRUCTURE, AND RELATED DEVICE**

(71) Applicant: Huawei Technologies Co., Ltd., Longgang District Shenzhen, Guangdong 518129 (CN)
(72) Inventor: LIU, Shaofeng, Shenzhen Guangdong 518129 (CN); DONG, Ying, Shenzhen Guangdong 518129 (CN)
(74) Representative: Goddar, Heinz J.
(86) International application number: PCT/CN2015/070293
(87) International publication number: WO 2016/109953

(57) **Abstract**

Embodiments of the present invention disclose a control signaling transmission method in an MCPTT architecture and a related device. The method may include: establishing, by a PCRF entity, a connection channel between the PCRF entity and an MCPTT application server; and transmitting, by the PCRF entity, control signaling for policy and charging to the MCPTT application server by using the connection channel. By means of the embodiments of the present invention, the control signaling for policy and charging can be transmitted between the PCRF and the MCPTT application server, and the transmission efficiency of the control signaling for policy and charging can be improved.

## Description

### TECHNICAL FIELD

The present invention relates to the communications field, and in particular, to a control signaling transmission method in a Mission Critical Push To Talk (Mission Critical Push To Talk, MCPTT) architecture and a related device.

### BACKGROUND

Currently, a radio trunk technology is widely applied to different industries, and with rapid development of a wireless technology, especially, a Long Term Evolution (Long Term Evolution, LTE) technology, LTE broadband trunking gradually becomes a trend of future development of a radio trunk service. In an LTE broadband trunking service process, policy and charging control is a very critical step.

In a current policy and charging control step, an application server performs policy and charging control on an LTE network by using a universal Rx interface of a policy and charging rule function (Policy and Charging Rule Function, PCRF) entity in the LTE network. In a 3GPP architecture, the Rx interface of the PCRF entity is oriented to a universal IP multimedia subsystem (IP Multimedia Subsystem, IP multimedia subsystem, IMS)/Session Initial Protocol (Session Initial Protocol, SIP) core network layer used as an AF (Application Function) application function. In this way, when the application server needs to transmit control signaling for policy and charging to the PCRF, the control signaling for policy and charging needs to be forwarded by the IMS/SIP core network layer. For example, for an MCPTT service, when an MCPTT application server needs to transmit control signaling for policy and charging to the PCRF, the MCPTT needs to transmit the control signaling for policy and charging to an IMS/SIP network. Then, the IMS/SIP network transmits the control signaling for policy and charging to the PCRF. Similarly, when the PCRF transmits control signaling for policy and charging to the MCPTT, the control signaling for policy and charging also needs to be forwarded by the IMS/SIP network. Besides, in some scenarios, no IMS/SIP network is deployed between a PCRF and an MCPTT application server. In this way, in the scenarios, control signaling for policy and charging cannot be transmitted between the PCRF and the MCPTT application server. As can be known, in the prior art, a problem that control signaling for policy and charging cannot be transmitted or the transmission efficiency is low exists between a PCRF and an MCPTT application server.

### SUMMARY

The present invention provides a control signaling transmission method in an MCPTT architecture and a related device, to transmit control signaling for policy and charging between a PCRF and an MCPTT application server and improve the transmission efficiency of the control signaling for policy and charging.

According to a first aspect, the present invention provides a control signaling transmission method in an MCPTT network architecture, including:
establishing, by a PCRF entity, a connection channel between the PCRF entity and an MCPTT application server; and
transmitting, by the PCRF entity, control signaling for policy and charging to the MCPTT application server by using the connection channel.

In a first possible implementation manner of the first aspect, the method further includes:
establishing, by the policy and charging rule function entity, a protocol entity at a side of the policy and charging rule function entity in the connection channel, where
the transmitting, by the policy and charging rule function entity, control signaling for policy and charging to the MCPTT application server by using the connection channel includes:
   transmitting, by the policy and charging rule function entity, the control signaling for policy and charging to the MCPTT application server by using the connection channel and by using a communications protocol of the protocol entity.

With reference to the first aspect or the first possible implementation manner of the first aspect, in a second possible implementation manner of the first aspect, the establishing, by a policy and charging rule function entity, a connection channel between the policy and charging rule function entity and an MCPTT application server includes:
establishing, by the policy and charging rule function entity, a physical channel between the policy and charging rule function entity and the MCPTT application server; and
establishing, by the policy and charging rule function entity on the physical channel, a logical channel connected to the MCPTT application server.

According to a second aspect, the present invention provides a control signaling transmission method in an MCPTT architecture, including:
establishing, by an MCPTT application server, a connection channel between the MCPTT application server and a policy and charging rule function entity; and
transmitting, by the MCPTT application server, control signaling for policy and charging to the PCRF entity by using the connection channel.

In a first possible implementation manner of the second aspect, the method further includes:
establishing, by the MCPTT application server, a protocol entity at a side of the MCPTT application server in the connection channel, where
the transmitting, by the MCPTT application server, control signaling for policy and charging to the policy and charging rule function entity by using the connection channel includes:
   transmitting, by the MCPTT application server, the control signaling for policy and charging to the policy and charging rule function entity by using the connection channel and by using a communications protocol of the protocol entity.

With reference to the second aspect or the first possible implementation manner of the second aspect, in a second possible implementation manner of the second aspect, the establishing, by an MCPTT application server, a connection channel between the MCPTT application server and a policy and charging rule function entity includes:
establishing, by the MCPTT application server, a physical channel between the MCPTT application server and the policy and charging rule function entity; and
establishing, by the MCPTT application server on the physical channel, a logical channel connected to the policy and charging rule function entity.

According to a third aspect, the present invention provides a PCRF entity, including: a first establishment unit and a transmission unit, where
the first establishment unit is configured to establish a connection channel between the PCRF entity and an MCPTT application server; and
the transmission unit is configured to transmit control signaling for policy and charging to the MCPTT application server by using the connection channel.

In a first possible implementation manner of the third aspect, the policy and charging rule function entity further includes:
a second establishment unit, configured to establish a protocol entity at a side of the policy and charging rule function entity in the connection channel, where
the transmission unit is configured to transmit the control signaling for policy and charging to the MCPTT application server by using the connection channel and by using a communications protocol of the protocol entity.

With reference to the third aspect or the first possible implementation manner of the third aspect, in a second possible implementation manner of the third aspect, the first establishment unit includes:
a physical establishment unit, configured to establish a physical channel between the PCRF entity and the MCPTT application server; and
a logical establishment unit, configured to establish, on the physical channel, a logical channel connected to the MCPTT application server.

According to a fourth aspect, the present invention provides an MCPTT application server, including: a first establishment unit and a transmission unit, where
the first establishment unit is configured to establish a connection channel between the MCPTT application server and a policy and charging rule function entity; and
the transmission unit is configured to transmit control signaling for policy and charging to the PCRF entity by using the connection channel.

In a first possible implementation manner of the fourth aspect, the MCPTT application server further includes:
a second establishment unit, configured to establish a protocol entity at a side of the application server in the connection channel, where
the transmission unit is configured to transmit the control signaling for policy and charging to the policy and charging rule function entity by using the connection channel and by using a communications protocol of the protocol entity.

With reference to the fourth aspect or the first possible implementation manner of the fourth aspect, in a second possible implementation manner of the fourth aspect, the first establishment unit includes:
a physical establishment unit, configured to establish a physical channel between the physical establishment unit and the policy and charging rule function entity; and
a logical establishment unit, configured to establish, on the physical channel, a logical channel connected to the policy and charging rule function entity.

According to a fifth aspect, the present invention provides a PCRF entity, including: a processor, a network interface, a memory, and a communications bus, where the communications bus is configured to implement connection and communication between the processor, the network interface, and the memory, and the processor is configured to execute a program stored in the memory, where the program includes:
establishing a connection channel between the PCRF entity and an MCPTT application server; and
transmitting control signaling for policy and charging to the MCPTT application server by using the connection channel.

In a first possible implementation manner of the fifth aspect, the program executed by the processor further includes:
establishing a protocol entity at a side of the policy and charging rule function entity in the connection channel, where
the program, executed by the processor, of transmitting control signaling for policy and charging to the MCPTT application server by using the connection channel includes:
   transmitting the control signaling for policy and charging to the MCPTT application server by using the connection channel and by using a communications protocol of the protocol entity.

With reference to the fifth aspect or the first possible implementation manner of the fifth aspect, in a second possible implementation manner of the fifth aspect, the program, executed by the processor, of establishing a connection channel between the PCRF entity and an MCPTT application server includes:
establishing a physical channel between the PCRF entity and the MCPTT application server; and
establishing, on the physical channel, a logical channel connected to the MCPTT application server.

According to a sixth aspect, the present invention provides an application server, including: a processor, a network interface, a memory, and a communications bus, where the communications bus is configured to implement connection and communication between the processor, the network interface, and the memory, and the processor is configured to execute a program stored in the memory, where the program includes:
establishing a connection channel between the application server and a policy and charging rule function entity; and
transmitting control signaling for policy and charging to the PCRF entity by using the connection channel.

In a first possible implementation manner of the sixth aspect, the program executed by the processor further includes:
establishing a protocol entity at a side of the MCPTT application server in the connection channel, where
the program, executed by the processor, of transmitting, by the MCPTT application server, control signaling for policy and charging to the policy and charging rule function entity by using the connection channel includes:
   transmitting the control signaling for policy and charging to the policy and charging rule function entity by using the connection channel and by using a communications protocol of the protocol entity.

With reference to the sixth aspect or the first possible implementation manner of the sixth aspect, in a second possible implementation manner of the sixth aspect, the program, executed by the processor, of establishing a connection channel between the application server and a policy and charging rule function entity includes:
establishing a physical channel between the application server and the policy and charging rule function entity; and
establishing, on the physical channel, a logical channel connected to the policy and charging rule function entity.

In the foregoing technical solutions, a PCRF entity establishes a connection channel between the PCRF entity and an MCPTT application server, and the PCRF entity transmits control signaling for policy and charging to the MCPTT application server by using the connection channel. In this way, when the control signaling for policy and charging is transmitted between the PCRF entity and a target application service, the control signaling for policy and charging does not need to be forwarded by an IMS/SIP network. Therefore, in the present invention, the transmission efficiency of the control signaling for policy and charging can be improved. Moreover, in some scenarios in which no IMS/SIP network is deployed, the PCRF and the MCPTT application server can also transmit the control signaling for policy and charging.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a control signaling transmission network architecture in an MCPTT architecture according to an embodiment of the present invention;
FIG. 2 is a schematic flowchart of a control signaling transmission method in an MCPTT architecture according to an embodiment of the present invention;
FIG. 3 is a schematic flowchart of another control signaling transmission method in an MCPTT architecture according to an embodiment of the present invention;
FIG. 4 is a schematic flowchart of another control signaling transmission method in an MCPTT architecture according to an embodiment of the present invention;
FIG. 5 is a schematic flowchart of another control signaling transmission method in an MCPTT architecture according to an embodiment of the present invention;
FIG. 6 is a schematic structural diagram of a PCRF entity according to an embodiment of the present invention;
FIG. 7 is a schematic structural diagram of another PCRF entity according to an embodiment of the present invention;
FIG. 8 is a schematic structural diagram of an MCPTT application server according to an embodiment of the present invention;
FIG. 9 is a schematic structural diagram of another MCPTT application server according to an embodiment of the present invention;
FIG. 10 is a schematic structural diagram of another PCRF entity according to an embodiment of the present invention; and
FIG. 11 is a schematic structural diagram of another MCPTT application server according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Embodiments of the present invention disclose a control signaling transmission method in an MCPTT architecture and a related device. A PCRF may transmit control signaling for policy and charging to an MCPTT application server by using a connection channel between the PCRF and the MCPTT application server, so that the control signaling for policy and charging does not need to be forwarded by an IMS/SIP network when the MCPTT server and the PCRF transmit the control signaling for policy and charging. In this way, the transmission efficiency of the control signaling for policy and charging can be improved, and in some scenarios in which no IMS/SIP network is deployed, the PCRF and the MCPTT application server can also transmit the control signaling for policy and charging. Detailed descriptions are provided separately below.

To better understand the embodiments of the present invention, a control signaling transmission network architecture in an MCPTT architecture disclosed in an embodiment of the present invention is first described below.

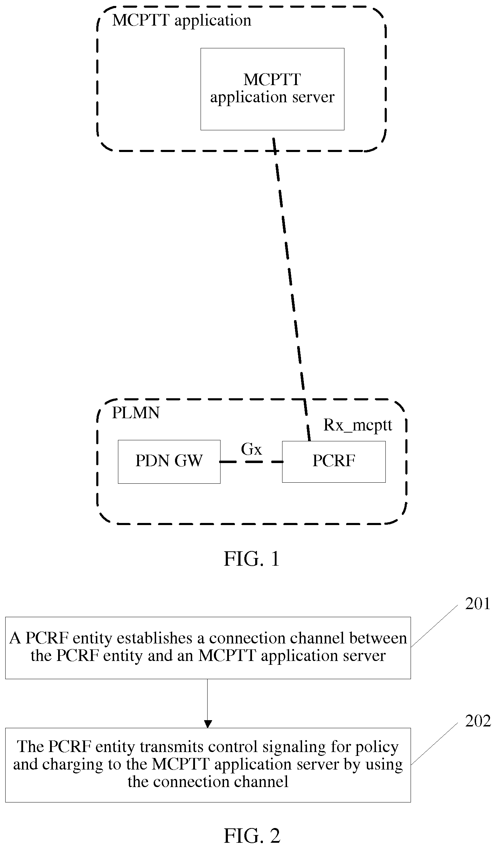

Referring to FIG. 1, FIG. 1 is a schematic diagram of a control signaling transmission network architecture in an MCPTT architecture according to an embodiment of the present invention. As shown in FIG. 1, the network architecture may include an MCPTT application server, a PCRF entity, and a packet data network gateway (Public Data Network Gateway, PDN GW). The PCRF entity transmits control signaling for policy and charging to the MCPTT application server by using a connection channel between the PCRF entity and the MCPTT application server. In the connection channel, the control signaling for policy and charging may be transmitted by using an Rx_mcptt interface oriented to the MCPTT application server shown in FIG. 1, and the PCRF entity transmits signaling to the PDN GW by using a Gx interface. In addition, the MCPTT application server may be located at a network application layer, and the PCRF entity and the PDN GW are located at a wireless network layer. For example, as shown in FIG. 1, the PCRF entity and the PDN GW are located on a public land mobile network ((Public Land Mobile Network, PLMN). The PLMN may be a PLMN in an LTE network.

Referring to FIG. 2, FIG. 2 is a schematic flowchart of a control signaling transmission method in an MCPTT architecture according to an embodiment of the present invention. As shown in FIG. 2, the method includes the following steps:
201: A PCRF entity establishes a connection channel between the PCRF entity and an MCPTT application server.
   The connection channel may be a point-to-point connection channel between the PCRF and the MCPTT application server. That is, two ends of the connection channel are respectively the PCRF and the MCPTT application server.
202: The PCRF entity transmits control signaling for policy and charging to the MCPTT application server by using the connection channel.

After establishing the connection channel in step 201, the PCRF entity may transmit the control signaling for policy and charging to the MCPTT application server by using the connection channel. Transmission of the control signaling for policy and charging herein may be: receiving, by the PCRF entity, the control signaling for policy and charging sent by the MCPTT application server, or may be: sending, by the PCRF entity, the control signaling for policy and charging to the MCPTT application server. Moreover, the control signaling for policy and charging in this embodiment of the present invention includes but is not limited to: control signaling for policy and charging that needs to be transmitted between the PCRF entity and the application server, such as policy and charging request signaling, policy and charging response signaling, or policy and charging notification signaling.

By means of the foregoing steps, the control signaling for policy and charging can be transmitted between the PCRF entity and the MCPTT application server and does not need to be forwarded by an IMS/SIP network, and the PCRF entity can transmit the control signaling for policy and charging directly to the MCPTT application server by using a logical interface, to improve the transmission efficiency of the control signaling for policy and charging. Moreover, in some scenarios in which no IMS/SIP network is deployed, the PCRF and the MCPTT application server may also transmit the control signaling for policy and charging. For example, the PCRF entity may transmit the control signaling for policy and charging to the MCPTT application server by using the Rx_mcptt interface shown in FIG. 1.

In this embodiment, a PCRF entity establishes a connection channel between the PCRF entity and an MCPTT application server, and the PCRF entity transmits control signaling for policy and charging to the MCPTT application server by using the connection channel. In this way, when the control signaling for policy and charging is transmitted between the PCRF entity and a target application service, the control signaling for policy and charging does not need to be forwarded by an IMS/SIP network, so as to improve the transmission efficiency of the control signaling for policy and charging. Moreover, in some scenarios in which no IMS/SIP network is deployed, the PCRF and the MCPTT application server can also transmit the control signaling for policy and charging.

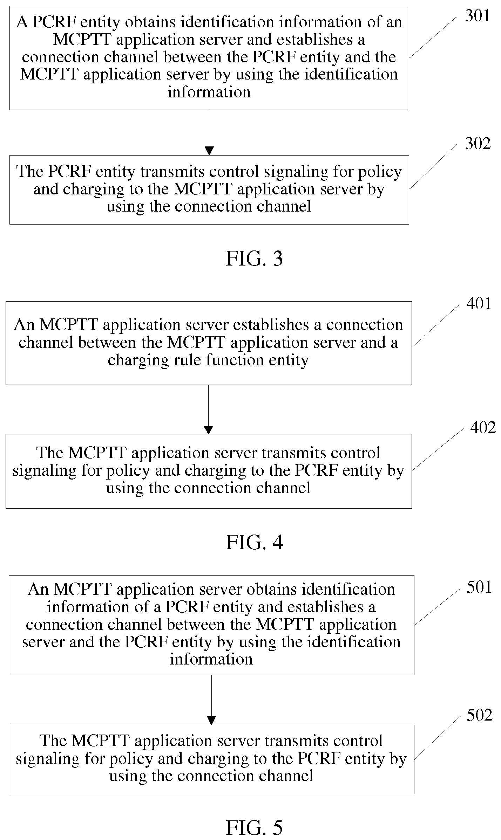

Referring to FIG. 3, FIG. 3 is a schematic flowchart of another control signaling transmission method in an MCPTT architecture according to an embodiment of the present invention. As shown in FIG. 3, the method includes the following steps:
301: A PCRF entity obtains identification information of an MCPTT application server and establishes a connection channel between the PCRF entity and the MCPTT application server by using the identification information.
   Optionally, the identification information may be information that can uniquely identify the MCPTT application server, such as address information or a network identifier of the MCPTT application server. In addition, the connection channel established between the PCRF entity and the MCPTT server may be a logical channel. Specifically, signaling may be transmitted to the MCPTT application server by using the logical channel and by using a physical channel between the PCRF entity and the MCPTT application server. The physical channel between the PCRF entity and the MCPTT application server may be preset. In addition, the physical channel may be understood as a physical path, a physical link, or a physical channel.
   Optionally, the step of establishing a connection channel between the PCRF entity and the MCPTT application server may include:
   establishing, by the PCRF entity, a physical channel between the PCRF entity and the MCPTT application server; and
   establishing, by the PCRF entity on the physical channel, a logical channel connected to the MCPTT application server.

   Specifically, a logical channel having a mapping relationship with the physical channel may be established. In this way, the logical channel can connect the PCRF and the MCPTT application server. In addition, entities at two ends of the logical channel are respectively the PCRF entity and the MCPTT application server. In addition, the establishing a physical channel may be: selecting, by the PCRF entity in a physical channel resource, a physical channel that can connect the PCRF and the MCPTT application server.
302: The PCRF entity transmits control signaling for policy and charging to the MCPTT application server by using the connection channel.

After the connection channel is established, the PCRF knows that an entity at an opposite end of the connection channel is the MCPTT application server. In this way, the PCRF may transmit the control signaling for policy and charging to the MCPTT application server by using a logical interface oriented to the MCPTT application server. For example, the control signaling for policy and charging is transmitted to the MCPTT application server by using Rx_mcptt shown in FIG. 1.

Optionally, the method may further include the following step:
establishing, by the PCRF entity, a protocol entity at a side of the PCRF entity in the connection channel.

The side of the PCRF entity may be one side connected to the PCRF entity in the connection channel. In this way, when the protocol entity is established at the side, the PCRF may transmit the control signaling for policy and charging to the MCPTT application server by using a protocol of the protocol entity. The protocol entity may be a protocol entity of a communications protocol that is used to transmit the control signaling for policy and charging, for example, a protocol entity of a TS29214 protocol.

In this implementation manner, step 302 may include:
transmitting, by the PCRF entity, the control signaling for policy and charging to the MCPTT application server by using the connection channel and by using a communications protocol of the protocol entity.

In this implementation manner, a communications protocol between the PCRF and the MCPTT application server may be determined by using the protocol entity.

Optionally, the control signaling for policy and charging transmitted between the PCRF and the MCPTT application server may be transmitted by using an interface message. Because a logical interface oriented to the MCPTT application server is used in a transmission process, the interface message may not need to use an IMS application-specific field and only needs to use a field of an application of the MCPTT application server. For example, a field of an MCPTT application is used, so that a field of the interface message is simpler. Certainly, in some application scenarios, to provide compatibility of the interface message, the interface message may also use an IMS application-specific field.

In this embodiment, multiple optional implementation manners are added based on the embodiment shown in FIG. 2. Moreover, in these implementation manners, when control signaling for policy and charging is transmitted between a PCRF entity and a target application service, the control signaling for policy and charging does not need to be forwarded by an IMS/SIP network, so as to improve the transmission efficiency of the control signaling for policy and charging. Moreover, in some scenarios in which no IMS/SIP network is deployed, the PCRF and an MCPTT application server can also transmit the control signaling for policy and charging.

Referring to FIG. 4, FIG. 4 is a schematic flowchart of another control signaling transmission method in an MCPTT architecture according to an embodiment of the present invention. As shown in FIG. 4, the method includes the following steps:
401: An MCPTT application server establishes a connection channel between the MCPTT application server and a policy and charging rule function entity.
   The connection channel may be a point-to-point connection channel between the PCRF and the MCPTT application server. That is, two ends of the connection channel are respectively the PCRF and the MCPTT application server.
402: The MCPTT application server transmits control signaling for policy and charging to the PCRF entity by using the connection channel.

By means of the foregoing steps, the control signaling for policy and charging can be transmitted between the PCRF entity and the MCPTT application server and does not need to be forwarded by an IMS/SIP network, and the PCRF entity can transmit the control signaling for policy and charging directly to the MCPTT application server by using a logical interface, to improve the transmission efficiency of the control signaling for policy and charging. Moreover, in some scenarios in which no IMS/SIP network is deployed, the PCRF and the MCPTT application server may also transmit the control signaling for policy and charging.

In this embodiment, an MCPTT application server establishes a connection channel between the MCPTT application server and a policy and charging rule function entity, and the MCPTT application server transmits control signaling for policy and charging to the PCRF entity by using the connection channel. In this way, when the control signaling for policy and charging is transmitted between the PCRF entity and a target application service, the control signaling for policy and charging does not need to be forwarded by an IMS/SIP network, so as to improve the transmission efficiency of the control signaling for policy and charging. Moreover, in some scenarios in which no IMS/SIP network is deployed, the PCRF and the MCPTT application server can also transmit the control signaling for policy and charging.

Referring to FIG. 5, FIG. 5 is a schematic flowchart of another control signaling transmission method in an MCPTT architecture according to an embodiment of the present invention. As shown in FIG. 5, the method includes the following steps:
501: An MCPTT application server obtains identification information of the PCRF entity and establishes a connection channel between the MCPTT application server and the PCRF entity by using the identification information.
   Optionally, the identification information may be information that can uniquely identify the PCRF entity, such as address information or a network identifier of the PCRF entity.
   Optionally, the step of establishing a connection channel between the MCPTT application server and the PCRF entity may include:
   establishing, by the MCPTT application server, a physical channel between the MCPTT application server and the PCRF entity; and
   establishing, by the MCPTT application server on the physical channel, a logical channel connected to the PCRF entity.

   Specifically, a logical channel having a mapping relationship with the physical channel may be established. In this way, the logical channel can connect the PCRF and the MCPTT application server. In addition, entities at two ends of the logical channel are respectively the PCRF entity and the MCPTT application server.
502: The MCPTT application server transmits control signaling for policy and charging to the PCRF entity by using the connection channel.

Optionally, the method may further include the following step:
establishing, by the MCPTT application server, a protocol entity at a side of the MCPTT application server in the connection channel.

The side of the MCPTT application server may be one side connected to the MCPTT application server in the connection channel. In this way, when the protocol entity is established at the side, the MCPTT application server may transmit the control signaling for policy and charging to the PCRF entity by using a protocol of the protocol entity. The protocol entity may be a protocol entity of a communications protocol that is used to transmit the control signaling for policy and charging, for example, a protocol entity of a TS29214 protocol.

In this implementation manner, step 502 may include:
transmitting, by the MCPTT application server, the control signaling for policy and charging to the PCRF entity by using the connection channel and by using a communications protocol of the protocol entity.

In this implementation manner, a communications protocol between the PCRF and the MCPTT application server may be determined by using the protocol entity.

In this embodiment, multiple optional implementation manners are added based on the embodiment shown in FIG. 4. Moreover, in these implementation manners, when control signaling for policy and charging is transmitted between a PCRF entity and a target application service, the control signaling for policy and charging does not need to be forwarded by an IMS/SIP network, so as to improve the transmission efficiency of the control signaling for policy and charging. Moreover, in some scenarios in which no IMS/SIP network is deployed, the PCRF and an MCPTT application server can also transmit the control signaling for policy and charging.

The following are apparatus embodiments of the present invention. The apparatus embodiments of the present invention are used to execute methods implemented in the first method embodiment to the fourth method embodiment of the present invention. For ease of description, only a part related to the embodiments of the present invention is shown, and for undisclosed specific technical details, refer to the first embodiment, the second embodiment, the third embodiment, and the fourth embodiment of the present invention.

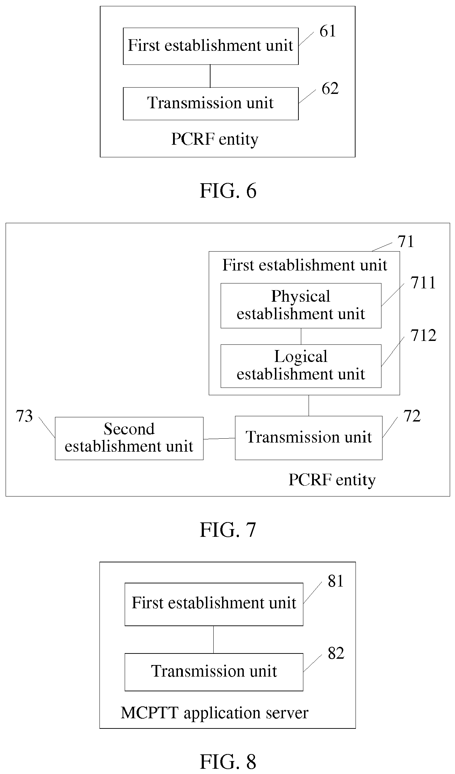

Referring to FIG. 6, FIG. 6 is a schematic structural diagram of a PCRF entity according to an embodiment of the present invention. As shown in FIG. 6, the PCRF entity includes a first establishment unit 61 and a transmission unit 62.

The first establishment unit 61 is configured to establish a connection channel between the PCRF entity and an MCPTT application server.

The transmission unit 62 is configured to transmit control signaling for policy and charging to the MCPTT application server by using the connection channel.

In this embodiment, the PCRF entity establishes a connection channel between the PCRF entity and an MCPTT application server, and the PCRF entity transmits control signaling for policy and charging to the MCPTT application server by using the connection channel. In this way, when the control signaling for policy and charging is transmitted between the PCRF entity and a target application service, the control signaling for policy and charging does not need to be forwarded by an IMS/SIP network, so as to improve the transmission efficiency of the control signaling for policy and charging. Moreover, in some scenarios in which no IMS/SIP network is deployed, the PCRF and the MCPTT application server can also transmit the control signaling for policy and charging.

Referring to FIG. 7, FIG. 7 is a schematic structural diagram of another PCRF entity according to an embodiment of the present invention. As shown in FIG. 7, the PCRF entity includes a first establishment unit 71 and a transmission unit 72.

The first establishment unit 71 is configured to obtain identification information of an MCPTT application server and establish a connection channel between the PCRF entity and the MCPTT application server by using the identification information.

The transmission unit 72 is configured to transmit control signaling for policy and charging to the MCPTT application server by using the connection channel.

Optionally, the PCRF entity may further include:
a second establishment unit 73, configured to establish a protocol entity at a side of the PCRF entity in the connection channel, where
the transmission unit 72 may be configured to transmit the control signaling for policy and charging to the MCPTT application server by using the connection channel and by using a communications protocol of the protocol entity.

In this implementation manner, a communications protocol between the PCRF and the MCPTT application server may be determined by using the protocol entity.

Optionally, the first establishment unit may include:
a physical establishment unit 711, configured to establish a physical channel between the PCRF entity and the MCPTT application server; and
a logical establishment unit 712, configured to establish, on the physical channel, a logical channel connected to the MCPTT application server.

In this embodiment, multiple optional implementation manners are added based on the embodiment shown in FIG. 6. Moreover, in these implementation manners, when control signaling for policy and charging is transmitted between a PCRF entity and a target application service, the control signaling for policy and charging does not need to be forwarded by an IMS/SIP network, so as to improve the transmission efficiency of the control signaling for policy and charging. Moreover, in some scenarios in which no IMS/SIP network is deployed, the PCRF and an MCPTT application server can also transmit the control signaling for policy and charging.

Referring to FIG. 8, FIG. 8 is a schematic structural diagram of an MCPTT application server according to an embodiment of the present invention. As shown in FIG. 8, the MCPTT application server includes a first establishment unit 81 and a transmission unit 82.

The first establishment unit 81 is configured to establish a connection channel between the MCPTT application server and a policy and charging rule function entity.

The transmission unit 82 is configured to transmit control signaling for policy and charging to the PCRF entity by using the connection channel.

In this embodiment, the application server establishes a connection channel between the application server and a PCRF entity, and the transmission unit 82 is configured to transmit control signaling for policy and charging to the PCRF entity by using the connection channel. In this way, when the control signaling for policy and charging is transmitted between the PCRF entity and a target application service, the control signaling for policy and charging does not need to be forwarded by an IMS/SIP network, so as to improve the transmission efficiency of the control signaling for policy and charging. Moreover, in some scenarios in which no IMS/SIP network is deployed, the PCRF and the MCPTT application server can also transmit the control signaling for policy and charging.

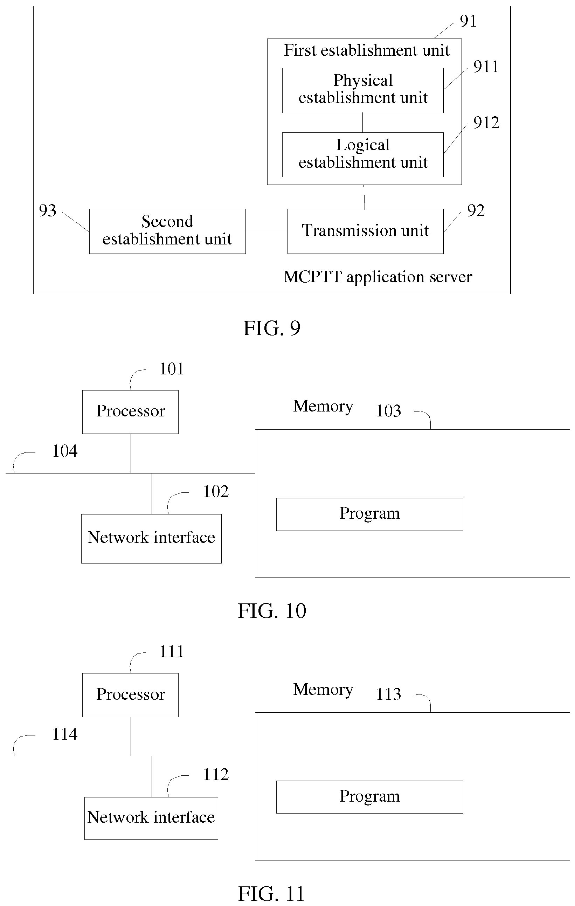

Referring to FIG. 9, FIG. 9 is a schematic structural diagram of another MCPTT application server according to an embodiment of the present invention. As shown in FIG. 9, the MCPTT application server includes a first establishment unit 91 and a transmission unit 92.

The first establishment unit 91 is configured to obtain identification information of a PCRF entity and establish a connection channel between the first MCPTT application server and the charging rule function entity by using the identification information.

The transmission unit 92 is configured to transmit control signaling for policy and charging to the PCRF entity by using the connection channel.

Optionally, the application server may further include:
a second establishment unit 93, configured to establish a protocol entity at a side of the application server in the connection channel, where
the transmission unit 92 may be configured to transmit the control signaling for policy and charging to the PCRF entity by using the connection channel and by using a communications protocol of the protocol entity.

Optionally, the first establishment unit 91 may include:
a physical establishment unit 911, configured to establish a physical channel between the MCPTT application server and the PCRF entity; and
a logical establishment unit 912, configured to establish, on the physical channel, a logical channel connected to the PCRF entity.

In this embodiment, multiple optional implementation manners are added based on the embodiment shown in FIG. 8. Moreover, in these implementation manners, when control signaling for policy and charging is transmitted between a PCRF entity and a target application service, the control signaling for policy and charging does not need to be forwarded by an IMS/SIP network, so as to improve the transmission efficiency of the control signaling for policy and charging. Moreover, in some scenarios in which no IMS/SIP network is deployed, the PCRF and an MCPTT application server can also transmit the control signaling for policy and charging.

Referring to FIG. 10, FIG. 10 is a schematic structural diagram of another PCRF entity according to an embodiment of the present invention. As shown in FIG. 10, the PCRF entity includes a processor 101, a network interface 102, a memory 103, and a communications bus 104. The communications bus 104 is configured to implement connection and communication between the processor 101, the network interface 102, and the memory 103, and the processor 101 is configured to execute a program stored in the memory 103. The program includes:
establishing a connection channel between the PCRF entity and an MCPTT application server; and
transmitting control signaling for policy and charging to the MCPTT application server by using the connection channel.

Optionally, the program executed by the processor 101 may further include:
establishing a protocol entity at a side of the PCRF entity in the connection channel, where
the program, executed by the processor 101, of transmitting control signaling for policy and charging to the MCPTT application server by using the connection channel includes:
   transmitting the control signaling for policy and charging to the MCPTT application server by using the connection channel and by using a communications protocol of the protocol entity.

Optionally, the program, executed by the processor 101, of establishing a connection channel between the PCRF entity and an MCPTT application server may include:
establishing a physical channel between the PCRF entity and the MCPTT application server; and
establishing, on the physical channel, a logical channel connected to the MCPTT application server.

In this embodiment, the PCRF entity establishes a connection channel between the PCRF entity and an MCPTT application server, and the PCRF entity transmits control signaling for policy and charging to the MCPTT application server by using the connection channel. In this way, when the control signaling for policy and charging is transmitted between the PCRF entity and a target application service, the control signaling for policy and charging does not need to be forwarded by an IMS/SIP network, so as to improve the transmission efficiency of the control signaling for policy and charging. Moreover, in some scenarios in which no IMS/SIP network is deployed, the PCRF and the MCPTT application server can also transmit the control signaling for policy and charging.

Referring to FIG. 11, FIG. 11 is a schematic structural diagram of still another MCPTT application server according to an embodiment of the present invention. A processor 111, a network interface 112, a memory 113, and a communications bus 114 are included. The communications bus 114 is used to implement connection and communication between the processor 111, the network interface 112, and the memory 113, and the processor 111 is used to execute a program stored in the memory 113. The program includes:
establishing a connection channel between the MCPTT application server and a policy and charging rule function entity; and
transmitting control signaling for policy and charging to the PCRF entity by using the connection channel.

Optionally, the program executed by the processor 111 may further include:
establishing a protocol entity at a side of the MCPTT application server in the connection channel, where
the program, executed by the processor 111, of transmitting, by the MCPTT application server, control signaling for policy and charging to the PCRF entity by using the connection channel includes:
   transmitting the control signaling for policy and charging to the PCRF entity by using the connection channel and by using a communications protocol of the protocol entity.

Optionally, the program, executed by the processor 111, of establishing a connection channel between the MCPTT application server and a policy and charging rule function entity may include:
establishing a physical channel between the MCPTT application server and the PCRF entity; and
establishing, on the physical channel, a logical channel connected to the PCRF entity.

In this embodiment, the application server establishes a connection channel between the application server and a PCRF entity, and the transmission unit 82 is configured to transmit control signaling for policy and charging to the PCRF entity by using the connection channel. In this way, when the control signaling for policy and charging is transmitted between the PCRF entity and a target application service, the control signaling for policy and charging does not need to be forwarded by an IMS/SIP network, so as to improve the transmission efficiency of the control signaling for policy and charging. Moreover, in some scenarios in which no IMS/SIP network is deployed, the PCRF and the MCPTT application server can also transmit the control signaling for policy and charging.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disc, an optical disc, a read-only memory (Read-Only Memory, ROM), or a random access memory (Random Access Memory, RAM).

What is disclosed above is merely example embodiments of the present invention, and certainly is not intended to limit the protection scope of the present invention. Therefore, equivalent variations made in accordance with the claims of the present invention shall fall within the scope of the present invention.

## Claims

1. A control signaling transmission method in an MCPTT architecture, comprising:
establishing, by a policy and charging rule function entity, a connection channel between the policy and charging rule function entity and an MCPTT application server; and
transmitting, by the policy and charging rule function entity, control signaling for policy and charging to the MCPTT application server by using the connection channel.

2. The method according to claim 1, wherein the method further comprises:
establishing, by the policy and charging rule function entity, a protocol entity at a side of the policy and charging rule function entity in the connection channel, wherein
the transmitting, by the policy and charging rule function entity, control signaling for policy and charging to the MCPTT application server by using the connection channel comprises:
transmitting, by the policy and charging rule function entity, the control signaling for policy and charging to the MCPTT application server by using the connection channel and by using a communications protocol of the protocol entity.

3. The method according to claim 1 or 2, wherein the establishing, by a policy and charging rule function entity, a connection channel between the policy and charging rule function entity and an MCPTT application server comprises:
establishing, by the policy and charging rule function entity, a physical channel between the policy and charging rule function entity and the MCPTT application server; and
establishing, by the policy and charging rule function entity on the physical channel, a logical channel connected to the MCPTT application server.

4. A control signaling transmission method in an MCPTT architecture, comprising:
establishing, by an MCPTT application server, a connection channel between the MCPTT application server and a policy and charging rule function entity; and
transmitting, by the MCPTT application server, control signaling for policy and charging to the policy and charging rule function entity by using the connection channel.

5. The method according to claim 4, wherein the method further comprises:
establishing, by the MCPTT application server, a protocol entity at a side of the MCPTT application server in the connection channel, wherein
the transmitting, by the MCPTT application server, control signaling for policy and charging to the policy and charging rule function entity by using the connection channel comprises:
transmitting, by the MCPTT application server, the control signaling for policy and charging to the policy and charging rule function entity by using the connection channel and by using a communications protocol of the protocol entity.

6. The method according to claim 4 or 5, wherein the establishing, by an MCPTT application server, a connection channel between the MCPTT application server and a policy and charging rule function entity comprises:
establishing, by the MCPTT application server, a physical channel between the MCPTT application server and the policy and charging rule function entity; and
establishing, by the MCPTT application server on the physical channel, a logical channel connected to the policy and charging rule function entity.

7. A policy and charging rule function entity, comprising: a first establishment unit and a transmission unit, wherein
the first establishment unit is configured to establish a connection channel between the policy and charging rule function entity and an MCPTT application server; and
the transmission unit is configured to transmit control signaling for policy and charging to the MCPTT application server by using the connection channel.

8. The policy and charging rule function entity according to claim 7, wherein the policy and charging rule function entity further comprises:
a second establishment unit, configured to establish a protocol entity at a side of the policy and charging rule function entity in the connection channel, wherein
the transmission unit is configured to transmit the control signaling for policy and charging to the MCPTT application server by using the connection channel and by using a communications protocol of the protocol entity.

9. The policy and charging rule function entity according to claim 7 or 8, wherein the first establishment unit comprises:
a physical establishment unit, configured to establish a physical channel between the policy and charging rule function entity and the MCPTT application server; and
a logical establishment unit, configured to establish, on the physical channel, a logical channel connected to the MCPTT application server.

10. An MCPTT application server, comprising: a first establishment unit and a transmission unit, wherein
the first establishment unit is configured to establish a connection channel between the MCPTT application server and a policy and charging rule function entity; and
the transmission unit is configured to transmit control signaling for policy and charging to the policy and charging rule function entity by using the connection channel.

11. The MCPTT application server according to claim 10, wherein the MCPTT application server further comprises:
a second establishment unit, configured to establish a protocol entity at a side of the application server in the connection channel, wherein
the transmission unit is configured to transmit the control signaling for policy and charging to the policy and charging rule function entity by using the connection channel and by using a communications protocol of the protocol entity.

12. The MCPTT application server according to claim 10 or 11, wherein the first establishment unit comprises:
a physical establishment unit, configured to establish a physical channel between the MCPTT application server and the policy and charging rule function entity; and
a logical establishment unit, configured to establish, on the physical channel, a logical channel connected to the policy and charging rule function entity.
